(19) Europäisches Patentamt
European Patent Office
Office européen des brevets

(11) **EP 4 761 363 A1**

(12) **EUROPEAN PATENT APPLICATION**
published in accordance with Art. 153(4) EPC

(43) Date of publication:
**17.06.2026  Bulletin 2026/25**

(21) Application number: **24851911.8**

(22) Date of filing: **08.08.2024**

(51) International Patent Classification (IPC):
*H04W 36/08* (2009.01)   *H04W 36/38* (2009.01)
*H04W 72/0446* (2023.01)   *H04W 72/231* (2023.01)
*H04W 74/04* (2009.01)   *H04W 76/10* (2018.01)

(52) Cooperative Patent Classification (CPC):
**H04W 36/08; H04W 36/38; H04W 72/0446;
H04W 72/231; H04W 74/04; H04W 76/10**

(86) International application number:
**PCT/JP2024/028416**

(87) International publication number:
**WO 2025/033494 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **09.08.2023  JP 2023130208**

(71) Applicant: **DENSO CORPORATION**
**Kariya-city, Aichi 448-8661 (JP)**

(72) Inventors:
• **MAEMOTO, Daiki**
  **Kariya- city, Aichi 4488661 (JP)**
• **NAGANO, Tatsuki**
  **Kariya- city, Aichi 4488661 (JP)**

(74) Representative: **TBK**
**Bavariaring 4-6**
**80336 München (DE)**

(54) **COMMUNICATION DEVICE, BASE STATION, AND COMMUNICATION METHOD**

(57)    A communication apparatus (100) according to an embodiment comprises: a receiver (112) configured to receive a radio resource control (RRC) message including configuration information related to Layer 1/Layer 2 triggered mobility (LTM) from a base station (200) and receive a cell switch command medium access control (MAC) control element (CE) including information for identifying the configuration information and instructing cell switching from the base station; and a controller (120) configured to determine to perform cell switching to a target cell corresponding to the information for identifying the configuration information, in a case where the cell switch command MAC CE is received, without a random access (RA) procedure. In a case where the cell switching to the target cell is performed without the RA procedure, the controller is configured to perform uplink transmission to the target cell. A resource in a time domain for the uplink transmission is determined by using a time domain resource allocation table determined based on information included in the configuration information.

FIG. 6

**Description**

Cross-Reference to Related Application

This application is based on and claims the benefit of priority from Japanese Patent Application No. 2023-130208, filed on August 9, 2023, the entire contents of which are incorporated herein by reference.

Technical Field

The present disclosure relates to a communication apparatus, a base station, and a communication method.

Background Art

In a mobile communication system conforming to the technical specification of the 3rd Generation Partnership Project (hereinafter, 3GPP (registered trademark)), which is a standardization project of a mobile communication system, introduction of L1 (Layer 1)/L2 (Layer 2) triggered mobility (L1/L2-Triggered Mobility: LTM) is scheduled (see, for example, Non-Patent Literature 1). In the LTM, a base station transmits a cell switch command for triggering cell switching to a communication apparatus by a medium access control control element (MAC CE) based on an L1 measurement report received from the communication apparatus, thereby switching a serving cell of the communication apparatus. The communication apparatus can dynamically perform the cell switching in a case where compared with the cell switching based on a radio resource control (RRC) message so that a mobility delay can be reduced.

In the LTM, for example, early synchronization in which the communication apparatus performs synchronization with a candidate cell before receiving a cell switch command, LTM execution in which the communication apparatus performs cell switching according to a cell switch command based on the L1 measurement report, and the like can be performed.

In the LTM execution, it is agreed that both a method of performing a random access procedure between the communication apparatus and the base station (hereinafter, appropriately referred to as RACH-base LTM) and a method of performing an uplink transmission by the communication apparatus without performing a random access procedure between the communication apparatus and the base station (hereinafter, appropriately referred to as a RACH-less LTM) are supported.

At present, whether to include an uplink grant in the cell switch command (MAC CE) in order to perform the uplink transmission to the target cell in a case where the RACH-less LTM is performed is being studied.

Citation List

Non Patent Literature

Non Patent Literature 1: 3GPP TSG-RAN WG2 Meeting #121, R2-2302039, "38.300 running CR for introduction of NR further mobility enhancements"

Summary of Invention

A communication apparatus according to a first aspect comprises: a receiver configured to receive a radio resource control (RRC) message including configuration information related to Layer 1/Layer 2 triggered mobility (LTM) from a base station and receive a cell switch command medium access control (MAC) control element (CE) including information for identifying the configuration information and instructing cell switching from the base station; and a controller configured to determine to perform cell switching to a target cell corresponding to the information for identifying the configuration information, in a case where the cell switch command MAC CE is received, without a random access (RA) procedure. In a case where the cell switching to the target cell is performed without the RA procedure, the controller is configured to perform uplink transmission to the target cell. A resource in a time domain for the uplink transmission is determined by using a time domain resource allocation table determined based on information included in the configuration information.

A base station according to a second aspect comprises: a transmitter configured to transmit a radio resource control (RRC) message including configuration information related to Layer 1/Layer 2 triggered mobility (LTM) to a communication apparatus and transmit a cell switch command medium access control (MAC) control element (CE) including information for identifying the configuration information and instructing cell switching to the communication apparatus; and a controller configured to include, in the configuration information, information for determining a time domain resource allocation table used for determining a resource in a time domain for uplink transmission to a target cell, in a case where the communication apparatus performs cell switching to the target cell corresponding to the information for identifying the configuration information based on the reception of the cell switch command MAC CE without a random access (RA) procedure.

A communication method according to a third aspect is a communication method performed by a communication apparatus. The communication method comprises the steps of: receiving a radio resource control (RRC) message including configuration information related to Layer 1/Layer 2 triggered mobility (LTM) from a base station and receiving a cell switch command medium access control (MAC) control element (CE) including information for identifying the configuration information and instructing cell switching from the base station; determining to perform cell switching to a target cell corresponding to information for identifying the configuration information, in a case where the cell switch command MAC CE is received, without a random access (RA) procedure; and performing uplink transmission to the target cell, in a case where the cell switching to the target cell is performed, without the RA procedure. A resource in a time domain for the uplink transmission is determined by using a time domain resource allocation table determined based on information included in the configuration information.

Brief Description of Drawings

Objects, features, advantages, and the like of the present disclosure will become more apparent from the following detailed description with reference to the accompanying drawings.

Fig. 1 is a diagram illustrating a configuration of a mobile communication system according to an embodiment.
Fig. 2 is a diagram illustrating a configuration example of a protocol stack according to the embodiment.
Fig. 3 is a diagram illustrating an overview of LTM.
Fig. 4 is a diagram illustrating a configuration of a UE according to the embodiment.
Fig. 5 is a diagram illustrating a configuration of a base station according to the embodiment.
Fig. 6 is a sequence diagram illustrating an operation example according to the embodiment.
Fig. 7 is a table illustrating an operation example according to the embodiment.

Description of Embodiments

A mobile communication system according to an embodiment is described with reference to the drawings. In the description of the drawings, the same or similar parts are denoted by the same or similar reference numerals.

However, in a case where the uplink transmission is performed to the target cell based on the uplink grant, a method of determining resources (for example, a resource in the time domain) for the uplink transmission is not defined. Therefore, there is a concern that a communication apparatus cannot appropriately perform the uplink transmission in a case where executing the RACH-less LTM, and the cell switching to the target cell fails in the LTM.

Therefore, it is an object of the present invention to provide a communication apparatus, a base station, and a communication method capable of appropriately performing uplink transmission in a case where RACH-less LTM is performed.

(System Configuration)

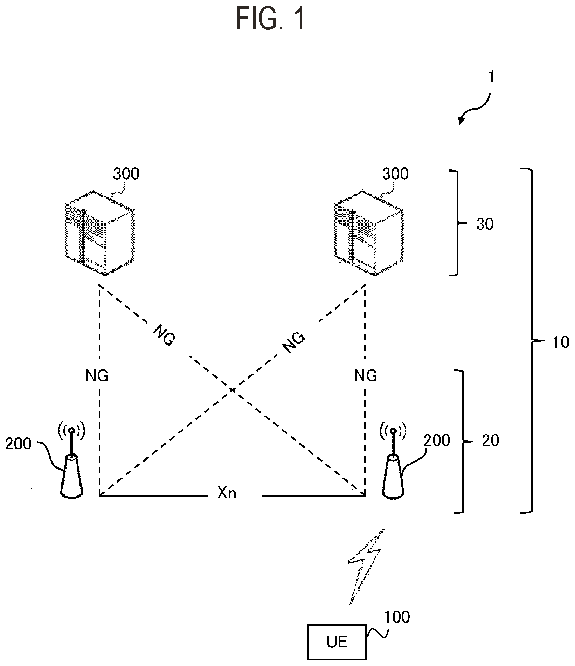

First, a configuration of a mobile communication system 1 according to the present embodiment is described with reference to Fig. 1. The mobile communication system 1 is, for example, a system conforming to a technical specification (TS) of 3GPP. Hereinafter, description is made with an example in which the 5th generation system (5G system) of the 3GPP standard, that is, a mobile communication system based on New Radio (NR radio access) is used as the mobile communication system 1.

The mobile communication system 1 includes a network 10 and a user equipment (UE) 100 that communicates with the network 10. The network 10 includes a next generation radio access network (NG-RAN) 20, which is a 5G radio access network, and a 5G core network (5GC) 30, which is a 5G core network.

The UE 100 is a communication apparatus that performs communication via a base station 200. The UE 100 may be an apparatus used by a user. The UE 100 is, for example, a mobile apparatus such as a mobile phone terminal such as a smartphone, a tablet terminal, a laptop PC, a communication module, or a communication card. The UE 100 may be a vehicle (for example, a car or a train) or an apparatus provided in the vehicle. The UE 100 may be a transport body other than a vehicle (for example, a ship or an airplane) or an apparatus provided in the transport body. The UE 100 may be a sensor or an apparatus provided in the sensor. Note that the UE 100 may be referred to as another term such as a terminal, a terminal apparatus, a mobile station, a mobile terminal, a mobile apparatus, a mobile unit, a subscriber station, a subscriber terminal, a subscriber apparatus, a subscriber unit, a wireless station, a wireless terminal, a wireless apparatus, a wireless unit, a remote station, a remote terminal, a remote apparatus, or a remote unit. In addition, the UE 100 is an example of a terminal, and the terminal may include a factory apparatus or the like.

The NG-RAN 20 includes the plurality of base stations 200. Each base station 200 manages at least one cell. The cell configures a minimum unit of a communication area. One cell belongs to one frequency (carrier frequency). The term "cell" may indicate a radio communication resource and may also indicate a communication object of the UE 100. Each base station 200 can perform radio communication with the UE 100 existing in its own cell. The base station 200 communicates with the UE 100 using a protocol stack of RAN. Details of the protocol stack are described below. Also, one base station 200 is connected to another base station 200 (may be referred to as a neighboring base station) via an Xn interface. The base station 200 communicates with the neighboring base station via the Xn interface. Also, the base station 200 provides NR user plane and control plane protocol terminations toward the UE 100 and is connected to the 5GC 30 via an NG interface. The NR base station 200 may be referred to as a gNodeB (gNB).

The 5GC 30 includes a core network apparatus 300. The core network apparatus 300 includes, for example, an access and mobility management function (AMF) and/or a user plane function (UPF). The AMF performs mobility management of the UE 100. The UPF provides a feature specialized for U-plane processing. The AMF and the UPF are connected to the base station 200 via the NG interface.

(Configuration Example of Protocol Stack)

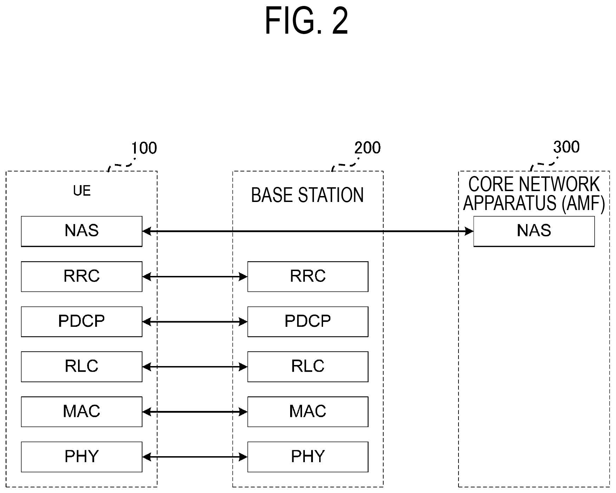

Next, a configuration example of the protocol stack according to the present embodiment is described with reference to Fig. 2.

A protocol of a radio section between the UE 100 and the base station 200 includes a physical (PHY) layer, a medium access control (MAC) layer, a radio link control (RLC) layer, a packet data convergence protocol (PDCP) layer, and a radio resource control (RRC) layer.

The PHY layer performs coding/decoding, modulation/demodulation, antenna mapping/demapping, and resource mapping/demapping. Data and control information are transmitted between the PHY layer of the UE 100 and the PHY layer of the base station 200 via a physical channel.

The MAC layer performs priority control of data, retransmission processing by hybrid ARQ (HARQ), random access procedure, and the like. Data and control information are transmitted between the MAC layer of the UE 100 and the MAC layer of the base station 200 via a transport channel. The MAC layer of the base station 200 includes a scheduler. The scheduler determines uplink and downlink transport formats (transport block size, and modulation and coding scheme (MCS)), and resources allocated to the UE 100.

The RLC layer transmits data to the RLC layer on the reception side using the features of the MAC layer and the PHY layer. Data and control information are transmitted between the RLC layer of the UE 100 and the RLC layer of the base station 200 via a logical channel.

The PDCP layer performs header compression/decompression and encryption/decryption.

A service data adaptation protocol (SDAP) layer may be provided as an upper layer of the PDCP layer. The service data adaptation protocol (SDAP) layer performs mapping between an IP flow to be a unit in which a core network performs quality of service (QoS) control, and a radio bearer to be a unit in which an access stratum (AS) performs QoS control.

The RRC layer controls a logical channel, a transport channel, and a physical channel according to establishment, reestablishment, and release of the radio bearer. RRC signaling for various configurations is transmitted between the RRC layer of the UE 100 and the RRC layer of the base station 200. When an RRC connection exists between the RRC of the UE 100 and the RRC of the base station 200, the UE 100 is in an RRC connected state. When no RRC connection exists between the RRC of the UE 100 and the RRC of the base station 200, the UE 100 is in an RRC idle state. When the RRC connection between the RRC of the UE 100 and the RRC of the base station 200 is suspended, the UE 100 is in an RRC inactive state.

A NAS layer positioned above the RRC layer in the UE 100 performs session management and mobility management of the UE 100. NAS signaling is transmitted between the NAS layer of the UE 100 and the NAS layer of the core network apparatus 300.

Note that the UE 100 has an application layer and the like in addition to the protocol of the radio interface.

(Radio Frame Configuration)

In the 5G system, downlink transmission and uplink transmission are configured in a radio frame of 10 ms duration. For example, the radio frame is expressed by a system frame number (SFN) of 0 to 1023. For example, the radio frame is configured with 10 subframes. For example, one subframe may be 1 ms. Also, one subframe may be configured with one or more slots. For example, the number of symbols configuring one slot is 14 for a normal cyclic prefix (CP) and 12 for an extended CP. Also, the number of slots configuring one subframe changes depending on a configured subcarrier spacing. For example, for the normal CP, in a case where the subcarrier spacing is configured as 15 kHz, the number of slots per subframe is one (that is, 14 symbols), in a case where the subcarrier spacing is configured as 30 kHz, the number of slots per subframe is two (that is, 28 symbols), in a case where the subcarrier spacing is configured as 60 kHz, the number of slots per subframe is four (that is, 56 symbols), and in a case where the subcarrier spacing is configured as 120 kHz, the number of slots per subframe is eight (that is, 128 symbols). For the extended CP, in a case where the subcarrier spacing is configured as 60 kHz, the number of slots per subframe is four (that is, 48 symbols). That is, the number of slots configuring one subframe is determined based on the subcarrier spacing configured by the base station 200. Also, the number of symbols configuring one subframe is determined based on the subcarrier spacing configured by the base station 200. That is, the number of symbols configuring the subframe of 1 ms is determined based on the subcarrier spacing configured by the base station 200, and the length (length in a time direction) of each symbol changes.

(LTM)

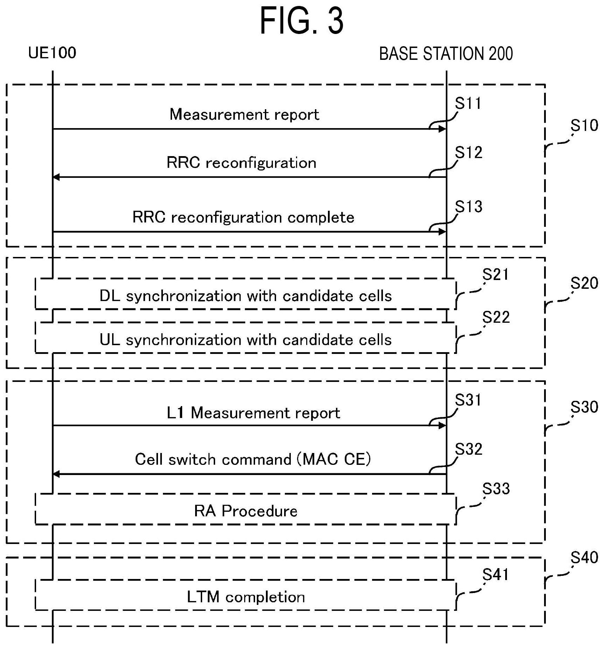

In the mobile communication system 1 conforming to the 3GPP technical specification, L1 (Layer 1)/L2 (Layer 2) triggered mobility (L1/L2-Triggered Mobility: LTM) is scheduled to be introduced. As illustrated in Fig 3, in the LTM, the following operations may be performed.

Step S10: LTM preparation

The UE 100 in the RRC connected state may perform the following operation as the LTM preparation operation.

Step S11:

The UE 100 transmits a measurement report message to the base station 200. The base station 200 determines to use the LTM and initiates candidate cell preparation.

Step S12:

The base station 200 transmits an RRC reconfiguration (RRCReconfiguration) message including the LTM candidate cell configuration of one or more candidate cells.

Step S13:

The UE 100 stores the LTM candidate cell configuration. The UE 100 transmits an RRC reconfiguration complete (RRCReconfigurationComplete) message to the base station 200.

Step S20: Early Synchronization

The UE 100 may perform the following operation as the operation of the early synchronization.

Step S21:

The UE 100 performs downlink (DL) synchronization with the candidate cell before receiving the cell switch command. The UE 100 may perform DL synchronization based on a synchronization signal (SS) and a physical broadcast channel (PBCH) block (SSB).

Step S22:

The UE 100 performs timing advance (TA) acquisition before receiving the cell switch command. The UE 100 may perform the TA acquisition based on the PDCCH order (specifically, the PDCCH ordered RACH). The PDCCH order may be triggered only by the source cell.

Step S30: LTM Execution

The UE 100 may perform the following operation as the operation of the LTM execution.

Step S31:

The UE 100 performs the L1 measurement on the candidate cell configured by the LTM candidate cell configuration. The UL 100 transmits a lower-layer measurement report based on the L1 measurement to the base station 200.

Step S32:

The base station 200 determines to perform cell switching to the target cell. The base station 200 transmits the MAC CE that triggers the cell switching by including the candidate configuration index of the target cell. The UE 100 switches the configuration of the target cell.

Step S33:

When the cell switching needs to include performing a random access (RA) procedure, the UE 100 performs the RA procedure toward the target cell.

Step S40: LTM Completion

The UE 100 may perform the following operation as the operation of the LTM completion.

Step S41:

The UE 100 indicates that the completion of the cell switching to the target cell is successful.
Note that the UE 100 may perform steps S20 to S40 a plurality of times for subsequent LTM cell switching based on the configuration without releasing the configuration provided in step S12.
Meanwhile, in the LTM execution, it is agreed that both a method of performing a RA procedure between the UE 100 and the base station 200 (hereinafter, appropriately referred to as RACH-base LTM) and a method of performing an uplink transmission by the UE 100 without performing a RA procedure between the UE 100 and the base station 200 (hereinafter, appropriately referred to as a RACH-less LTM) are supported. At present, whether to include an uplink grant (UL grant) in the cell switch command (MAC CE) in order to perform the uplink transmission to the target cell in a case where the RACH-less LTM is performed is being studied.
However, in a case where the uplink transmission is performed to the target cell based on the uplink grant, a method of determining resources (for example, a resource in the time domain) for the uplink transmission is not defined. Therefore, there is a concern that the UE 100 cannot appropriately perform the uplink transmission in a case where performing the RACH-less LTM, and the cell switching to the target cell fails in the LTM. In an embodiment described below, an operation for enabling the uplink transmission to be appropriately performed in a case where the RACH-less LTM is performed is described.
Furthermore, in a case where the uplink grant is provided to the UE 100 using the MAC CE or in a case where the processing for cell switching is performed in the UE 100, there is a concern that a delay occurs until the uplink transmission to the target cell is performed, as compared with a case where the uplink grant is provided to the UE 100 using the downlink control information (DCI). As a result, a problem that uplink transmission cannot be performed on the resource in the time domain allocated in the uplink grant may occur. In an embodiment described below, an operation for enabling the uplink transmission to be appropriately performed in a case where the RACH-less LTM is performed is described.

(Configuration of User Equipment)

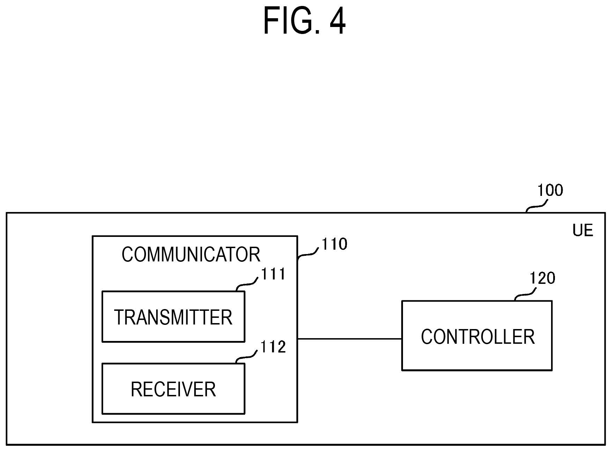

A configuration of the UE 100 according to the embodiment is described with reference to Fig. 4. The UE 100 includes a communicator 110 and a controller 120.
The communicator 110 performs radio communication with the base station 200 by transmitting and receiving a radio signal to and from the base station 200. The communicator 110 includes at least one transmitter 111 and at least one receiver 112. The transmitter 111 and the receiver 112 may be configured with a plurality of antennas and a radio frequency (RF) circuit. The antenna converts a signal into a radio wave and emits the radio wave into a space. Furthermore, the antenna receives a radio wave in a space and converts the radio wave into a signal. The RF circuit performs analog processing of a signal transmitted and received via the antenna. The RF circuit may include a high frequency filter, an amplifier, a modulator, a low pass filter, and the like.
The controller 120 performs various types of control in the UE 100. The controller 120 controls communication with the base station 200 via the communicator 110. The operation of the UE 100 described above and described below may be an operation controlled by the controller 120. The controller 120 may include at least one processor capable of executing a program and a memory that stores the program. The processor may perform the program and perform the operation of the controller 120. The controller 120 may include a digital signal processor that performs digital processing of a signal transmitted and received via the antenna and the RF circuit. The digital processing includes processing of the protocol stack of the RAN. Note that the memory stores the program to be performed by the processor, parameters related to the program, and data related to the program. The memory may include at least one of a read only memory (ROM), an erasable programmable read only memory (EPROM), an electrically erasable programmable read only memory (EEPROM), a random access memory (RAM), and a flash memory. All or a part of the memory may be included in the processor.

In the UE 100 having the above configuration, the receiver 112 receives the cell switch command for triggering the cell switching from the base station 200 by the MAC CE. The controller 120 controls the uplink transmission to the target cell performed without the RA procedure between the UE 100 and the target cell based on the cell switch command. When the cell switch command includes the uplink grant for performing the uplink transmission, the controller 120 determines a resource in the time domain for the uplink transmission. For example, in a case where the cell switch command includes the uplink grant for performing the uplink transmission, the controller 120 may determine (may use) the TDRA table for the LTM in order to determine the resource in the time domain for the uplink transmission. As a result, the UE 100 can determine the resource in the time domain for the uplink transmission using the determined TDRA table for the LTM, so that the uplink transmission can be appropriately performed in a case where the RACH-less LTM is performed.

(Configuration of Base Station)

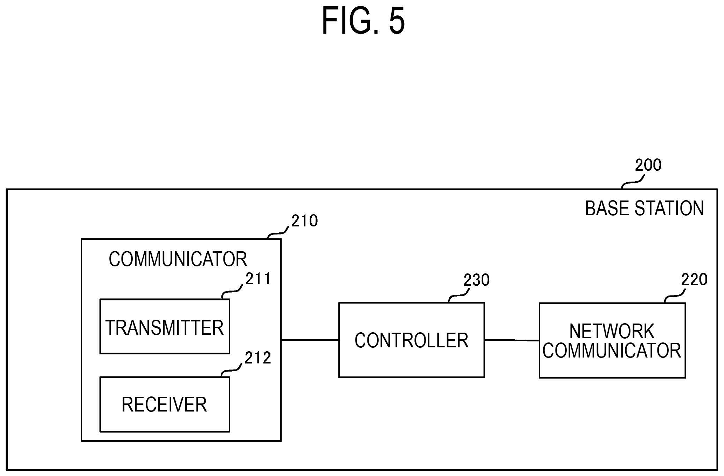

A configuration of the base station 200 according to the embodiment is described with reference to Fig. 5. The base station 200 includes a communicator 210, a network communicator 220, and a controller 230.

For example, the communicator 210 receives a radio signal from the UE 100 and transmits the radio signal to the UE 100. The communicator 210 includes at least one transmitter 211 and at least one receiver 212. The transmitter 211 and the receiver 212 may include an RF circuit. The RF circuit performs analog processing of a signal transmitted and received via the antenna. The RF circuit may include a high frequency filter, an amplifier, a modulator, a low pass filter, and the like.

The network communicator 220 transmits and receives a signal to and from a network. The network communicator 220 receives, for example, a signal from a neighboring base station connected via the Xn interface that is an interface between base stations and transmits a signal to the neighboring base station. Also, the network communicator 220 receives a signal, for example, from the core network apparatus 300 connected via the NG interface and transmits the signal to the core network apparatus 300.

The controller 230 performs various types of control in the base station 200. The controller 230 controls, for example, communication with the UE 100 via the communicator 210. Also, the controller 230 controls, for example, communication with a node (for example, the neighboring base station or the core network apparatus 300) via the network communicator 220. The operation of the base station 200 described above and described below may be an operation controlled by the controller 230. The controller 230 may include at least one processor capable of executing a program and a memory that stores the program. The processor may perform the program and perform the operation of the controller 230. The controller 230 may include a digital signal processor that performs digital processing of a signal transmitted and received via the antenna and the RF circuit. The digital processing includes processing of the protocol stack of the RAN. Note that the memory stores the program to be performed by the processor, parameters related to the program, and data related to the program. All or a part of the memory may be included in the processor.

(Operation Example)

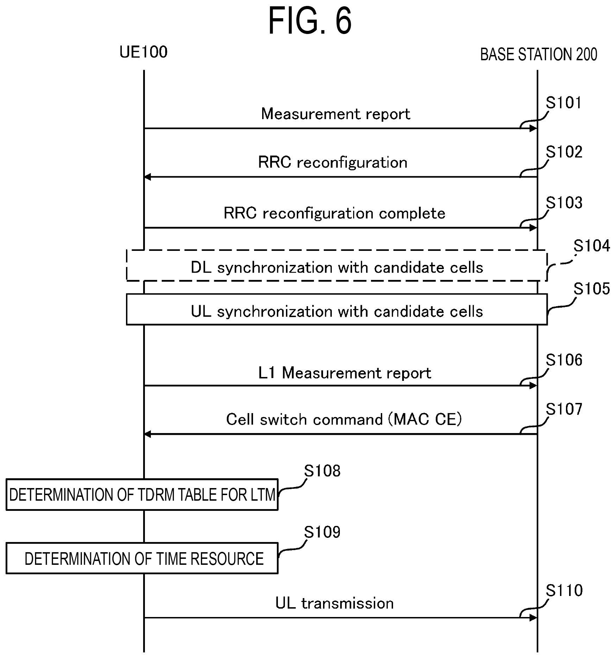

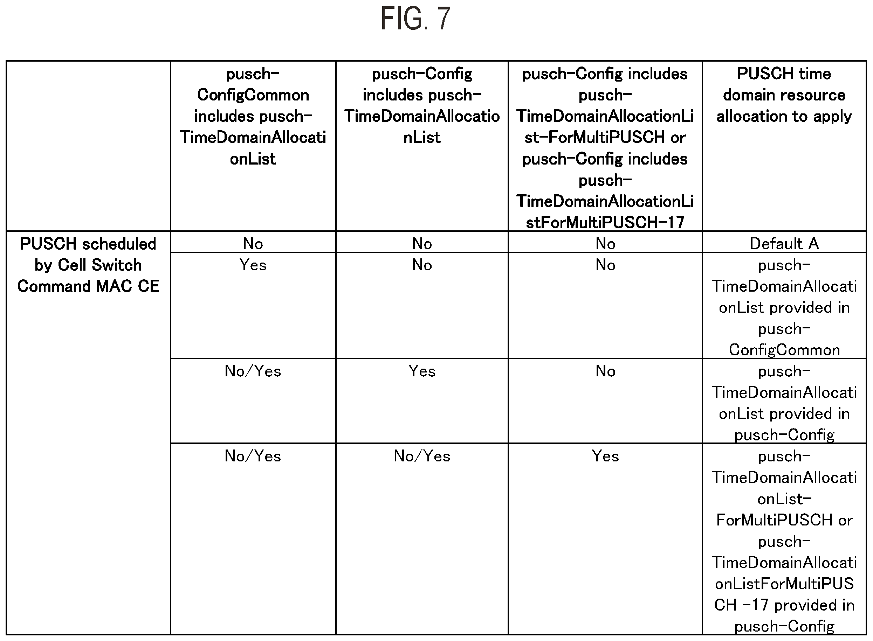

An operation example is described with reference to Figs. 6 and 7. Already provided description is omitted in some cases. The UE 100 is in an RRC connected state with a cell (a source cell) managed by the base station 200. Hereinafter, the UE 100 performs communication with the base station 200 in the source cell until the cell switching to the target cell is performed.

Step S101:

The transmitter 111 of the UE 100 transmits a measurement report (message) to the base station 200. The receiver 212 of the base station 200 receives the measurement report from the UE 100.

The controller 230 of the base station 200 determines whether to use the LTM. For example, the controller 230 may determine whether to use the LTM based on the measurement report. When it is determined to use the LTM, the controller 230 initiates candidate cell preparation.

The controller 230 may choose the candidate cell of the target cell in the LTM as the candidate cell preparation based on the measurement report. For example, the controller 230 may choose a candidate cell from among cells managed by the base station 200. Furthermore, the controller 230 may generate configuration information (hereinafter, referred to as LTM configuration information) regarding the LTM. For example, the controller 230 may include the generated LTM configuration information in the RRC reconfiguration message. That is, the controller 230 may instruct the UE 100 to perform the LTM (operation related to the LTM) by including the LTM configuration information in the RRC reconfiguration message. When the LTM configuration information is included in the RRC reconfiguration message, the UE 100 may perform the LTM (operation related to LTM).

The controller 230 may include, in the LTM configuration information (for example, LTM-Config), for example, at least one of a list (hereinafter, referred to as an LTM candidate release list (for example, ltm-CandidateToReleaseList)) for releasing a candidate cell and a list (hereinafter, the LTM addition/modification list (for example, ltm-CandidateToAddModList)) for adding or modifying a candidate cell. The LTM addition/modification list may be a list configured with information of one or more candidate cells (for example, LTM-Candidate). The information of the candidate cell may include, for example, at least one of the following information.

· Identifier of candidate cell (for example, ltm-CandidateId)
· Configuration information related to candidate cell (for example, ltm-CandidateConfig)
·Information (for example, ltm-ConfigComplete) indicating whether the configuration information related to a candidate cell is a complete configuration or a delta-configuration
· Configuration information (for example, ltm-EarlyUlSyncConfig) for configuring information to be used for early synchronization
· Cell identifier (for example, ltm-NoResetID) in which L2 reset is not performed at the time of cell switching
· List for adding/modifying information to be used for early synchronization (for example, ltm-Candidate-Tci-States-ToAddModList)
· Identifier (for example, ltm-Candidate-Tci-States-ToReleaseList) for canceling (deleting) information used for early synchronization

The identifier of the candidate cell may be an identifier of the candidate cell configuration. Further, the configuration information (hereinafter, candidate cell configuration information) related to the candidate cell may include the RRC configuration (may be RRC reconfiguration or RRC reconfiguration message) configured in the UE 100. Further, the candidate cell configuration information may include cell group configuration information (for example, CellGroupConfig) including serving cell configuration information (for example, ServingCellConfig) and the like. Note that the candidate cell configuration information may correspond to the LTM candidate cell configuration included in the RRC reconfiguration message in step S12 described above.

Step S102:

The transmitter 211 of the base station 200 transmits the RRC reconfiguration message including the LTM configuration information to the UE 100. The receiver 112 of the UE 100 receives the RRC reconfiguration message from the base station 200. The controller 120 of the UE 100 stores the LTM configuration information.

Step S103:

The transmitter 111 of the UE 100 transmits a RRC reconfiguration completion message to the base station 200. The receiver 212 of the base station 200 receives the RRC reconfiguration completion message from the UE 100.

Step S104:

Downlink synchronization with each candidate cell may be performed as an operation of early synchronization. The controller 120 of the UE 100 performs downlink synchronization, for example, based on the SSB transmitted from each candidate cell.

Step S105:

Uplink synchronization may be performed as an operation of early synchronization. For example, the transmitter 211 of the base station 200 may transmit a physical downlink control channel (PDCCH) order (that is, downlink control information (DCI)) for initiating the RA procedure for early synchronization to the UE 100 in each candidate cell configured for the UE 100 by the candidate cell configuration information. The receiver 112 of the UE 100 may receive the PDCCH order from the base station 200. Note that the PDCCH order in the early synchronization may be a PDCCH order (PDCCH ordered-RACH for TA Acquisition without RAR) used for acquiring the TA value without the RA response.
The controller 120 of the UE 100 may initiate the RA procedure based on the PDCCH order. The controller 120 may control the RA procedure based on the configuration information (hereinafter, the early synchronization configuration information) for configuring information to be used for early synchronization.

The transmitter 111 of the UE 100 transmits the RA preamble (message 1) to the base station 200 on a physical random access channel (PRACH) in each candidate cell. The receiver 212 of the base station 200 receives the RA preamble from the UE 100 in each candidate cell.

The controller 230 of the UE 100 may use the RA preamble based on the early synchronization configuration information or may use the RA preamble based on the information included in the PDCCH order. For example, the controller 230 of the base station 200 may include the preamble index or may further include the SSB index in the PDCCH order. The preamble index indicates which RA preamble is to be used. The SSB index indicates an SSB used to determine a RACH opportunity for PRACH transmission. The controller 120 of the UE 100 may determine the RA preamble based on the preamble index (and the SSB index). For example, the controller 120 may use other information included in the PDCCH order and/or other information included in the early synchronization configuration information to transmit the RA preamble.

The controller 230 of the base station 200 calculates a timing advance (TA) value based on the RA preamble from the UE 100. The controller 230 may perform control to omit transmission of an RA response (that is, message 2) that is a response to the RA preamble.

Step S106:

The transmitter 111 of the UE 100 performs the L1 measurement on each candidate cell configured by the candidate cell configuration information and then transmits the L1 measurement report to the base station 200. The receiver 212 of the base station 200 receives the L1 measurement report from the UE 100. The L1 measurement report is a measurement report of the lower layer based on the L1 measurement. The L1 measurement report is transmitted in a layer lower than the RRC layer. Note that the measurement report in step S101 is transmitted in the RRC layer.

The controller 230 of the base station 200 determines a target cell (that is, the LTM target cell) in the LTM based on the L1 measurement report. In addition, in the LTM execution, the controller 230 may determine whether to cause the UE 100 to perform a RACH-less LTM in which the UE 100 performs the uplink transmission without performing the RA procedure between the UE 100 and the base station 200 or to cause the UE 100 to perform a RACH-base LTM in which the RA procedure is performed between the UE 100 and the base station 200.

When the TA value in the target cell is calculated by performing the early synchronization, the controller 230 may determine to cause the UE 100 to perform the RACH-less LTM. The controller 230 may determine to cause the UE 100 to perform the RACH-less LTM in a case where setting a valid value as the TA value in the target cell to the MAC CE for transmitting a cell switch command to be described below. Meanwhile, in a case where the TA value in the target cell is not calculated, the controller 230 may determine to cause the UE 100 to perform the RACH-base LTM. When setting an invalid value as the TA value in the target cell to the MAC CE, the controller 230 may determine to cause the UE 100 to perform the RACH-base LTM. In the present operation example, the description proceeds on the assumption that the controller 230 determines to cause the UE 100 to perform the RACH-less LTM.

The controller 230 generates a MAC CE for transmitting a cell switch command. The MAC CE may be referred to as, for example, an LTM cell switch command MAC CE. The MAC CE may be referred to as a cell switch command (that is, may be a cell switch command). Hereinafter, the LTM cell switch command MAC CE may be appropriately referred to as a cell switch command. The cell switch command may include, for example, at least one piece of the following information (that is, field).

· Target Configuration Identifier (Target Configuration ID) indicating the index of the candidate target configuration to apply to the LTM cell switching
· Timing Advance Command indicating whether TA for LTM target cell is valid
· Identifier of TCI state (TCI state ID) indicating and activating a transmission configuration indication (TCI) state for LTM target cell
· Identifier of uplink TCI state (UL TCI state ID) indicating and activating uplink TCI state for LTM target cell
· Identifier of downlink bandwidth part (DL BWP ID) activated in LTM target cell
· Identifier of uplink bandwidth part (UL BWP ID) activated in LTM target cell

The target configuration identifier may be an identifier of a candidate cell to be a target cell that is a cell after the switching among the identifiers of the candidate cells included in the information of the candidate cell described above.

The timing advance command (field) may indicate whether TA (TA value) is valid for the target cell (for example, SpCell) corresponding to the target configuration (that is, the candidate cell configuration information) indicated by the target configuration identifier (field). When a designated value (for example, FFF) is set as the value of the field, the field may indicate that effective timing adjustment cannot be used for the primary timing advance group (PTAG) of the LTM target cell. In this case, the UE 100 needs to perform the RA procedure to the LTM target cell. That is, the UE 100 performs the RACH-base LTM. Meanwhile, in a case where a value other than the designated value (for example, FFF) is set as the value of the field, the field indicates an index value (that is, the TA value) used to control the amount of timing adjustment to be applied by the MAC entity of the UE 100. That is, the timing advance command (field) indicates that the RA procedure of the LTM cell switching can be skipped. In this case, the UE 100 performs the RACH-less LTM. Here, the designated value is defined in advance by a specification or the like and may be a value known between the base station 200 and the UE 100.

In the present operation example, the description proceeds on the assumption that the controller 230 of the base station 200 sets the TA value calculated by performing the early synchronization in the timing advance command.

The controller 230 may determine whether to include the uplink grant for performing the uplink transmission in the cell switch command. For example, the controller 230 may include the uplink grant in the cell switch command in a case where causing the UE 100 to perform the RACH-less LTM. Meanwhile, the controller 230 may not include the uplink grant in the cell switch command in a case where causing the UE 100 to perform the RACH-base LTM. In the present operation example, the description proceeds on the assumption that the controller 230 includes (determines to include) the uplink grant in the cell switch command. Note that the uplink grant includes an index value corresponding to a row index described below.

Step S107:

The transmitter 211 of the base station 200 transmits the cell switch command to the UE 100 by the MAC CE. The receiver 112 of the UE 100 receives the cell switch command from the base station 200 by the MAC CE.

The controller 120 of the UE 100 switches the configuration of the target cell based on the identifier (that is, the target configuration identifier) of the candidate cell included in the cell switch command (MAC CE). For example, the controller 120 applies the candidate cell configuration information associated with the identifier of the candidate cell that is the same as the target configuration identifier included in the cell switch command (MAC CE).

The controller 120 determines whether to perform the RACH-base LTM or to perform the RACH-less LTM based on the value included in the timing advance command. When a designated value (for example, FFF) is set in the timing advance command, the controller 120 determines to perform the RACH-base LTM. Meanwhile, in a case where a value other than a designated value (for example, FFF) is set in the timing advance command, the controller 120 determines to perform the RACH-less LTM. In the present operation example, the description proceeds on the assumption that the controller 120 determines to perform the RACH-less LTM. Therefore, the controller 120 of the UE 100 determines to control the uplink transmission to the target cell performed without the RA procedure between the UE 100 and the target cell based on the cell switch command. The uplink transmission may be the first uplink transmission (First ULtransmission) to the target cell. The first uplink transmission may be an operation at LTM completion.

The controller 120 determines whether the cell switch command includes an uplink grant for performing uplink transmission. When the cell switch command includes the uplink grant, the controller 120 may perform the operation of the following step S 108. The uplink grant may be for the first uplink transmission to the target cell. Note that, in a case where the cell switch command does not include the uplink grant, the controller 120 may perform the operation of step S110, for example, based on the candidate cell configuration information.

Step S108:

The controller 120 of the UE 100 determines a time domain resource allocation (Time domain resource assignment : TDRA) table (hereinafter, appropriately referred to as an LTM TDRA table) for the LTM in order to determine a resource in the time domain for the uplink transmission. The controller 120 may determine the LTM TDRA table by at least one of the following methods. Note that the resource in the time domain may be referred to as a time resource.

In the first method, the controller 120 determines the dedicated TDRA table for the uplink grant included in the cell switch command as the LTM TDRA table.

The transmitter 211 of the base station 200 may transmit information (hereinafter, appropriately referred to as LTM TDRA information) for configuring the LTM TDRA table, which is a dedicated TDRA table, to the UE 100. The receiver 112 of the UE 100 receives the LTM TDRA information from the base station 200.

The LTM TDRA information may be a list of time domain allocations (hereinafter, referred to as a TDA list as appropriate) used to configure the time domain relationship between the uplink grant (or the cell switch command) and the (first) uplink transmission. Therefore, the TDA list may be information indicating the configuration of the LTM TDRA table. The TDA list may configure the LTM TDRA table.

The LTM TDRA information may be information for configuring a common dedicated TDRA table for each candidate cell configured in the UE 100 as a candidate for the target cell. The controller 120 of the UE 100 may determine the dedicated TDRA table common to the candidate cells as the LTM TDRA table. Therefore, the LTM TDRA table may be commonly configured for each candidate cell. For example, the controller 230 of the base station 200 may include the LTM TDRA information in a field arranged in parallel with a field in which the LTM candidate release list in the LTM configuration information is set, instead of each candidate cell configuration information.

The LTM TDRA information may also be information for configuring a dedicated TDRA table dedicated for each candidate cell configured in the UE 100 as a candidate for the target cell. The controller 120 of the UE 100 may determine the dedicated TDRA table dedicated for the candidate cell corresponding to the target cell as the LTM TDRA table. Therefore, the LTM TDRA table may be individually configured for each candidate cell. For example, the controller 230 of the base station 200 may include the LTM TDRA information in each candidate cell configuration information. For example, the controller 120 of the UE 100 may determine the dedicated TDRA table (that is, the LTM TDRA information) included in the candidate cell configuration information associated with the identifier of the candidate cell that is the same as the target configuration identifier included in the cell switch command as the LTM TDRA table.

Note that the LTM TDRA information (TDRA list) may include, for example, at least one item of information such as a slot offset value (K2), a start and length indicator value (SLIV), and a PUSCH mapping type. The slot offset value (K2) may indicate a time (offset) from the slot in which the uplink grant (cell switch command) is received to the slot in which the uplink transmission is performed. The SLIV may be an index specifying a valid combination of start symbol and length. Instead of the SLIV, the time domain resource allocation may include information (for example, Length: L) indicating a symbol length allocated for the (first) uplink transmission (for example, the PUSCH) and information (for example, startSymbol: S) indicating an index of a start symbol for the (first) uplink transmission (for example, the PUSCH).

In addition, a dedicated TDRA table for the uplink grant included in the cell switch command may be defined in advance. The LTM TDRA table that is a dedicated TDRA table may be defined, for example, in the 3GPP technical specification. The controller 120 may determine a predefined dedicated TDRA table as the LTM TDRA table without receiving the LTM TDRA information from the base station 200.

Note that, in the dedicated TDRA table, in consideration of specific delay time caused by the MAC CE including the uplink grant, for example, the maximum value of the slot offset value may be configured to be larger than the maximum value of the slot offset value of the default TDRA table.

In the second method, the controller 120 determines, as the LTM TDRA table, a TDRA table that is not dedicated to the uplink grant included in the cell switch command but is also used to perform other uplink transmissions. For example, the controller 120 determines the TDRA table for a physical uplink shared channel (PUSCH) as the LTM TDRA table. For example, the controller 120 determines the TDRA table for the LTM based on the TDRA table for the PUSCH configured in the candidate cell configuration information associated with the candidate cell corresponding to the target cell.

For example, the controller 120 may determine the TDRA table for the LTM based on a time domain resource allocation list (that is, the TDRA table) included in the configuration information used for configuring the PUSCH parameter. For example, the controller 120 may determine the TDRA table for LTM according to a rule defined in the table illustrated in Fig. 7. Specifically, the controller 120 may determine the TDRA table for the LTM based on a time domain allocation (TDA) list (that is, the TDRA table) included in at least one of configuration information (for example, PUSCH-ConfigCommon) (hereinafter, cell-specific information) used for configuring the cell-specific PUSCH parameter and configuration information (for example, PUSCH-Config) (hereinafter, UE-specific information) used for configuring the UE-specific PUSCH parameter applicable to a specific BWP. Here, the configuration information used to configure the PUSCH parameter may be included in each of one or more pieces of candidate cell configuration information. That is, at least one of the cell-specific information and/or the UE-specific information may be included in each of one or more pieces of candidate cell configuration information. As described above, the controller 120 of the UE 100 may apply the candidate cell configuration information associated with the identifier of the candidate cell included in the cell switch command among one or more pieces of candidate cell configuration information. That is, the controller 120 of the UE 100 may apply the information (for example, configuration information, cell-specific information, and/or UE-specific information used for configuring the PUSCH parameter) included in the candidate cell configuration information associated with the identifier of the candidate cell based on the identifier of the candidate cell included in the cell switch command. The controller 120 of the UE 100 may determine the information to be applied among the information included in the information (for example, LTM-Candidate) of one or more candidate cells based on the identifier of the candidate cell included in the cell switch command. As illustrated in Fig. 7, in a case where the UE-specific information includes a first TDA list (for example, pusch-TimeDomainAllocationListForMultiPUSCH or pusch-TimeDomainAllocationListForMultiPUSCH-17) indicating the configuration of the TDRA table for a plurality of PUSCHs, the controller 120 may determine the TDRA table configured in the first TDA list as the LTM TDRA table regardless of whether the UE-specific information and the cell-specific information include a second TDA list described below.

When the UE-specific information includes a second TDA list (for example, pusch-TimeDomainAllocationList) used for configuring the time domain relationship between the PDCCH and the PUSCH, and the UE-specific information does not include the second TDA list, the controller 120 may determine the TDRA table configured with the second TDA list included in the UE-specific information as the LTM TDRA table, regardless of whether the cell-specific information includes the second TDA list.

When the cell-specific information includes the second TDA list, and the UE-specific information does not include the first TDA list and the second TDA list, the controller 120 may determine the TDRA table configured with the second TDA list included in the cell-specific information as the LTM TDRA table.

When the UE-specific information does not include the first TDA list and the second TDA list, and the cell-specific information does not include the second TDA list, the controller 120 may determine the predefined default TDRA table as the TDRA table for the LTM. That is, in a case where the TDRA table for the PUSCH is not configured by the candidate cell configuration information (or the LTM configuration information), the controller 120 may determine a predefined default TDRA table as the TDRA table for the LTM.

Step S109:

The controller 120 of the UE 100 determines the time resource for the uplink transmission using the LTM TDRA table.

The LTM TDRA table may be configured with, for example, a row index and a parameter (for example, a PUSCH mapping type, a slot offset value (K2), a symbol length (L), and a start symbol (S)) associated with the row index.

The controller 120 determines the time resource of the uplink transmission by using the parameter associated with the row index (for example, m+1) corresponding to the index value (for example, m) included in the uplink grant.

For example, the controller 120 uses a slot offset value associated with a row index corresponding to an index value (hereinafter, the UL grant) included in the uplink grant in the LTM TDRA table to determine the time resource. Specifically, the controller 120 determines a slot shifted by the slot offset value from the slot in which the cell switch command is received as the slot of the uplink transmission occasion.

When the default TDRA table is used as the LTM TDRA table, the controller 120 may determine the time resource based on the subcarrier spacing (for example, $\mu$PUSCH) of the uplink bandwidth part (UL BWP) in the target cell. For example, the controller 120 may determine a calculated value (for example, j) for calculating the slot offset value based on the subcarrier spacing.

The controller 120 may determine the subcarrier spacing based on the identifier of the UL BWP included in the cell switch command.

The controller 120 may determine the subcarrier spacing based on the identifier of the UL BWP included in the candidate cell configuration information. Here, the identifier of the UL BWP included in the candidate cell configuration information may be the identifier of the initial UL BWP of the candidate cell specified by the target configuration identifier included in the cell switch command. Alternatively, the identifier of the UL BWP may be an identifier (for example, firstActiveUplinkBWP-Id) of the UL BWP to be activated at a designated timing included in the candidate cell configuration information specified by the target configuration identifier included in the cell switch command. The designated timing is the time of performing the RRC (re)configuration for the SpCell and the time of SCell activation for the SCell. The identifier of the UL BWP to be activated at the designated timing may be included in the serving cell configuration information (for example, ServingCellConfig) included in the cell group configuration information (for example, CellGroupConfig) in the candidate cell configuration information.

The controller 120 may determine the slot offset value based on the determined subcarrier spacing. A table defining a correspondence relationship between the subcarrier spacing and the calculated value may be defined in advance. The controller 120 may use the table to determine the slot offset value associated with the determined subcarrier spacing as the slot offset value to be used.

Furthermore, the controller 120 may determine the time resource by applying an additional delay value $\Delta$ in addition to the determined slot offset value.

The additional delay value may be, for example, a value (that is, a specific value) defined in advance for the uplink grant included in the cell switch command. For example, a table defining a correspondence relationship between the subcarrier spacing and the additional delay value may be defined in advance. The controller 120 may determine the additional delay value associated with the determined subcarrier spacing using the table, as an additional delay value to be applied. The additional delay value may be a slot delay value.

The receiver 112 of the UE 100 may receive information (hereinafter, delay value information) for configuring an additional delay value from the base station 200. An additional delay value may be commonly configured for each candidate cell by the delay value information. In this case, the controller 120 of the base station 200 may include the delay value information in a field arranged in parallel with a field in which the LTM candidate release list in the LTM configuration information is set, instead of each candidate cell configuration information. Also, the additional delay value may be individually configured for each candidate cell by the delay value information. In this case, the controller 230 of the base station 200 may include, for example, the delay value information in each candidate cell configuration information. Even if the additional delay value is defined in advance, the controller 120 may apply the additional delay value based on the delay value information received from the base station 200. When the delay value information has not been received, the controller 120 may apply a predefined value (for example, values described in the technical specification) to the additional delay value.

The controller 120 determines a slot, for example, shifted by the slot offset value and the additional delay value from the slot in which the cell switch command is received as the slot of the uplink transmission occasion. Therefore, in a case where the UE 100 transmits the uplink transmission (for example, the PUSCH) scheduled by (the uplink grant in) the cell switch command, an additional delay value may be applied in addition to the slot offset value (K2).

For example, the controller 120 uses a start symbol (S) associated with a row index corresponding to an index value (hereinafter, the UL grant) included in the uplink grant in the LTM TDRA table to determine the time resource. Specifically, the controller 120 determines the symbol indicated by the start symbol (S) as the symbol for initiating the uplink transmission in the slot of the uplink transmission occasion.

For example, the controller 120 uses a symbol length (L) associated with a row index corresponding to an index value (hereinafter, the UL grant) included in the uplink grant in the LTM TDRA table to determine the time resource. Specifically, the controller 120 determines the symbol length indicated by the symbol length (L) as the length of the uplink transmission.

Step S110:

The controller 120 of the UE 100 controls the transmitter 111 to perform the uplink transmission by using the time resource determined by using the LTM TDRA table. Note that the controller 120 of the UE 100 may determine other resources (for example, resources in the frequency domain) for the uplink transmission based on the LTM configuration information (for example, candidate cell configuration information (that is, candidate cell configuration information corresponding to the target configuration identifier included in the cell switch command) of the candidate cell corresponding to the target cell). The transmitter 111 of the UE 100 transmits uplink transmission (for example, the first uplink data) to the base station 200. The receiver 112 of the base station 200 receives the uplink transmission from the UE 100.

Note that the controller 230 of the base station 200 may recognize that the UE 100 has switched the serving cell to the target cell based on the reception of the first uplink transmission (for example, the first uplink data) in the target cell. As a result, the controller 230 may determine that the LTM execution procedure has been normally performed (that is, the LTM completion has been performed). Further, in a case where determining that the network 10 (for example, the base station 200) has normally received the first uplink transmission (for example, the first uplink data), the controller 120 of the UE 100 may determine that the LTM execution procedure has been normally performed (that is, the LTM completion has been performed).

As described above, the receiver 112 of the UE 100 receives the cell switch command for triggering the cell switching from the base station 200 by the MAC CE. The controller 120 controls the uplink transmission to the target cell performed without the RA procedure between the UE 100 and the target cell based on the cell switch command. When the cell switch command includes the uplink grant for performing the uplink transmission, the controller 120 determines the TDRA table for the LTM in order to determine the time resource for the uplink transmission. As a result, the UE 100 can determine the time resource for the uplink transmission using the determined TDRA table for the LTM, so that the uplink transmission can be appropriately performed in a case where the RACH-less LTM is performed.

Also, the controller 120 may determine the dedicated TDRA table for the uplink grant included in the cell switch command as the TDRA table for the LTM. As a result, with respect to the dedicated TDRA table, the TDRA table is not used for other purposes, and thus each parameter can be defined in consideration of a case where the uplink grant is sent by the cell switch command. As a result, the UE 100 can determine the time resource for the uplink transmission using an appropriate parameter and can appropriately perform the uplink transmission.

Furthermore, due to provision of the uplink grant to the UE 100 using the MAC CE or execution of the processing for cell switching in the UE 100, there is a concern that a delay occurs until the uplink transmission to the target cell is performed, as compared with a case where the uplink grant is provided to the UE 100 using the downlink control information (DCI). Specifically, since the uplink grant is provided to the UE 100 by using the MAC CE transmitted in the MAC layer, a processing delay occurs in the UE 100 as compared with a case where the uplink grant is provided to the UE 100 by using DCI transmitted in a layer lower than the MAC layer. In addition, since the UE 100 performs the processing for cell switching, a delay occurs until the processing of initiating the uplink transmission is initiated. Therefore, for example, it is possible to define a dedicated TDRA table including, as a parameter, a new slot offset value in which a normal slot offset value and an additional delay value are considered. As a result, the UE 100 can appropriately perform the uplink transmission without failing in the uplink transmission due to the delay.

Also, the receiver 112 may receive information for configuring a common dedicated TDRA table for each candidate cell configured in the UE 100 as a candidate for the target cell, from the base station 200. The controller 120 may determine the dedicated TDRA table common to the candidate cells as the TDRA table for the LTM. As a result, radio resources can be saved as compared with a case where information for configuring a dedicated TDRA table dedicated to each candidate cell is received.

Also, the receiver 112 may receive information for configuring a dedicated TDRA table dedicated for each candidate cell configured in the UE 100 as a candidate for the target cell from the base station 200. The controller 120 may determine the dedicated TDRA table dedicated for the candidate cell corresponding to the target cell as the TDRA table for the LTM. As a result, since each parameter to be applied to the uplink transmission can be designated for each cell, the parameter can be flexibly configured.

In addition, the receiver 112 may receive configuration information related to configuration of a candidate cell that is a candidate for the target cell from the base station 200. The controller 120 may determine the TDRA table for the LTM based on the TDRA table for the PUSCH configured in the configuration information associated with the candidate cell corresponding to the target cell. As a result, since the TDRA table for the PUSCH is already defined, it is possible to reduce the influence on the existing technical specifications and the mobile communication system 1 as compared with a case where the dedicated TDRA table is newly defined.

Also, in a case where the TDRA table for the PUSCH is not configured by the configuration information, the controller 120 may determine a predefined default TDRA table as the TDRA table for the LTM. The controller 120 may determine the time resource based on the subcarrier spacing of the uplink bandwidth part in the target cell. As a result, since the UE 100 can determine the time resource corresponding to the subcarrier spacing, the uplink transmission can be appropriately performed.

Also, the controller 120 may determine the subcarrier spacing based on the identifier of the uplink bandwidth part included in the cell switch command. As a result, the base station 200 can dynamically designate the subcarrier spacing for determining the time resource.

In addition, the controller 120 may determine the subcarrier spacing based on the identifier of the uplink bandwidth part included in the configuration information. As a result, the amount of information included in the cell switch command can be reduced, and radio resources can be saved.

In addition, the controller 120 may determine a slot offset value that is time from a slot in which the uplink grant is received to a slot in which the uplink transmission is performed based on the index value included in the uplink grant and the TDRA table for the LTM. The controller 120 may determine the time resource by applying an additional delay value in addition to the determined slot offset value. As a result, the UE 100 can appropriately perform the uplink transmission without failing in the uplink transmission due to the delay.

Also, the additional delay value may be a value defined in advance for the uplink grant included in the cell switch command. As a result, it is not necessary to notify the UE 100 of an additional delay value from the base station 200, so that radio resources can be saved.

Furthermore, the receiver 112 may receive information for configuring the additional delay value from the base station 200. As a result, the base station 200 can flexibly configure the additional delay value, for example, according to the capability of the UE 100, and the UE 100 can appropriately perform uplink transmission.

As described above, the controller 230 of the base station 200 may not include the uplink grant for performing the uplink transmission in the cell switch command. For example, in a case where the UE 100 is caused to perform the RACH-less LTM, the controller 230 of the base station 200 may control the uplink transmission based on information included in each of one or more pieces of candidate cell configuration information. The controller 230 of the base station 200 may control the uplink transmission by including a ConfiguredGrant configuration (may be an rrc-ConfiguredUplinkGrant configuration) in each of one or more pieces of candidate cell configuration information. For example, the information (that is, a ConfiguredGrant configuration or a PhysicalCellGroup configuration) included in each of one or more candidate cell configuration information may include at least one of information indicating a configured scheduling radio network temporary identifier (CS-RNTI), information indicating a resource for uplink transmission (information indicating time resource and/or information indicating resource (frequency resource) in time domain), information indicating a redundancy version (for example, information indicating a sequence of redundancy versions), information indicating a modulation and coding scheme (MCS), information indicating the number of repetitions of uplink transmission (information indicating the number of repetitions), information indicating a time reference SFN (time reference SFN), and information indicating a time offset (time domain offset) related to the time reference SFN. Here, the type of uplink transmission for which transmission is configured (that is, the uplink grant is provided) by the RRC layer (that is, the ConfiguredGrant configuration included in the RRC message) is also referred to as ConfiguredGrant type 1.

For example, information indicating the CS-RNTI may be configured to instruct retransmission of uplink transmission. Furthermore, the information indicating the time resource for the uplink transmission (that is, PUSCH transmission) may include information indicating a cycle and/or an offset for the uplink transmission (PUSCH resource). Furthermore, the information indicating the time reference SFN may indicate the SFN used to determine the offset of the resource in the time domain. For example, the information indicating the time reference SFN may indicate 0 or 512. The UE 100 may use the SFN of the closest instructed number (for example, 0 or 512) before the reception of the ConfiguredGrant configuration as the time reference SFN. In addition, the time offset related to the time reference SFN may indicate an offset of a resource related to the SFN (that is, the time reference SFN) in the time domain. For example, the UE 100 may determine, to the time reference SFN, the resource (for example, SFN, slot, and/or symbol) in the time domain for the uplink transmission by adding the time offset related to the time reference SFN. That is, the UE 100 may determine the resource (for example, SFN, slot, and/or symbol) in the time domain for the uplink transmission based on the time reference SFN and/or the time offset related to the time reference SFN.

For example, the base station 200 may configure (transmit) information indicating the time reference SFN set to 512 to the UE 100 in SFN "1023". Here, it is assumed that the UE 100 fails to decode the ConfiguredGrant configuration transmitted in the SFN "1023" from the base station 200. The base station 200 may reconfigure (retransmit) information indicating the time reference SFN set to 512 to the UE 100 in SFN "0" of the next SFN of the SFN "1023". The UE 100 can identify that 512 (that is, SFN "512") is used as a reference (that is, reference to time Domain Offset) for determining the offset of the resource in the time domain with respect to the uplink transmission based on the information indicating the time reference SFN set to 512. As described above, the information indicating the time reference SFN is configured by the base station 200, so that it is possible to share the time reference SFN for the uplink transmission between the UE 100 and the base station 200, for example, in a case where the SFN is changed from "1023" to "0" (in a case where wraparound of the SFN occurs).

Here, in a case where the uplink transmission is configured by the RRC layer (that is, the uplink grant is provided), the UE 100 may store the uplink grant as a configured uplink grant. The UE 100 may consider that the configured uplink grant is sequentially generated in the resources (for example, SFN, slot, and/or symbol) in the time domain fulfilling the following formula. That is, the UE 100 may consider that the configured uplink grant has occurred and perform the uplink transmission in the resource of the time domain.

$$[(\text{SFN} \times \text{numberOfSlotsPerFrame} \times \text{numberOfSymbolsPerSlot})$$
$$+ (\text{slot number in the frame} \times \text{numberOfSymbolsPerSlot}) + \text{symbol number in}$$
$$\text{the slot}] =$$
$$(\text{timeReferenceSFN} \times \text{numberOfSlotsPerFrame} \times \text{numberOfSymbolsPerSlot}$$
$$+ \text{timeDomainOffset} \times \text{numberOfSymbolsPerSlot} + S + N \times \text{periodicity})$$
$$\text{modulo} (1024 \times \text{numberOfSlotsPerFrame} \times \text{numberOfSymbolsPerSlot})$$

That is, the UE 100 may determine the resource (that is, the PUSCH resource) in the time domain for the uplink transmission (also referred to as the ConfiguredGrant transmission) based on the information included in the ConfiguredGrant configuration and perform the uplink transmission using the determined resource. As described above, the UE 100 may apply the candidate cell configuration information associated with the identifier of the candidate cell included in the cell switch command among one or more pieces of candidate cell configuration information. That is, the controller 120 of the UE 100 may apply the information (for example, the ConfiguredGrant configuration) included in the candidate cell configuration information associated with the identifier of the candidate cell based on the identifier of the candidate cell included in the cell switch command. The UE 100 may identify the ConfiguredGrant configuration included in the candidate cell configuration information associated with the identifier of the candidate cell based on the identifier of the candidate cell included in the cell switch command and perform the uplink transmission to the target cell (for example, the base station 200 of the target cell). Here, the uplink transmission may be performed on the resource in the above-described time domain. In addition, as described above, a value other than the designated value (for example, FFF) may be set in the timing advance field included in the cell switch command.

Here, in the LTM, in a case where the UE 100 tries to perform the uplink transmission based on the ConfiguredGrant configuration, there is a possibility that the SFN serving as a reference for the uplink transmission does not match between the UE 100 and the target cell (for example, the base station 200 of the target cell). That is, for the UE 100 that has determined the SFN to be the reference for the uplink transmission based on the information indicating the time reference SFN included in the candidate cell configuration information, the base station 200 of the target cell cannot specify which SFN is to be the reference for the uplink transmission, and there is a possibility that the uplink transmission from the UE 100 cannot be received.

Here, the UE 100 may determine the SFN used to determine the offset of the resource in the time domain based on the timing (for example, SFN, slot, and/or symbol) at which the LTM configuration information is received. For example, the UE 100 may use the closest instructed number (for example, 0 or 512 instructed by using information indicating the time reference SFN) before the reception of the LTM configuration information as the SFN used to determine the offset of the resource in the time domain. That is, the UE 100 may use the SFN of the closest instructed number before the reception of the LTM configuration information as a reference (that is, reference to time Domain Offset) for determining the offset of the resource in the time domain with respect to the uplink transmission. When receiving the identifier of the candidate cell included in the cell switch command, the UE 100 may use the closest SFN before the LTM configuration information is received based on the information indicating the time reference SFN included in the candidate cell configuration information (that is, the LTM configuration information) corresponding to the identifier of the candidate cell.

Also, the UE 100 may determine the SFN used to determine the offset of the resource in the time domain based on the timing (for example, SFN, slot, and/or symbol) at which the corresponding candidate cell configuration information is applied. For example, the UE 100 may use the closest instructed number (for example, 0 or 512 instructed by using information indicating the time reference SFN) before the application of the corresponding candidate cell configuration information as the SFN used to determine the offset of the resource in the time domain. That is, the UE 100 may use the SFN of the closest instructed number before the application of the corresponding candidate cell configuration information as a reference for determining the offset of the resource in the time domain with respect to the uplink transmission. For example, in a case where receiving the identifier of the candidate cell included in the cell switch command, the UE 100 may use the closest SFN before the candidate cell configuration information is applied based on the information indicating the time reference SFN included in the candidate cell configuration information (that is, the LTM configuration information) corresponding to the identifier of the candidate cell.

Also, the UE 100 may determine the SFN used to determine the offset of the resource in the time domain based on the timing (for example, SFN, slot, and/or symbol) at which the cell switch command is received. For example, the UE 100 may use the closest instructed number (for example, 0 or 512 instructed by using information indicating the time reference SFN) before the reception of the cell switch command as the SFN used to determine the offset of the resource in the time domain. That is, the UE 100 may use the SFN of the closest instructed number before the reception of the cell switch command as a reference for determining the offset of the resource in the time domain with respect to the uplink transmission. For example, in a case where receiving the identifier of the candidate cell included in the cell switch command, the UE 100 may use the closest SFN before the cell switch command is received based on the information indicating the time reference SFN included in the candidate cell configuration information (that is, the LTM configuration information) corresponding to the identifier of the candidate cell.

Here, the information indicating the time reference SFN may be included in the cell switch command. That is, the UE 100 may determine the SFN used to determine the offset of the resource in the time domain based on the information indicating the time reference SFN included in the cell switch command. For example, the UE 100 may determine the SFN used to determine the offset of the resource in the time domain as described above based on the information indicating the time reference SFN included in the cell switch command.

(Other Embodiments)

In the above-described embodiment, the mobile communication system based on the NR is described as the example of the mobile communication system 1. However, the mobile communication system 1 is not limited to the example. The mobile communication system 1 may be a system conforming to a TS of LTE (Long Term Evolution) or another generation system (for example, sixth generation) of the 3GPP standard. The base station 200 may be an eNB that provides E-UTRA user plane and control plane protocol terminations toward the UE 100 in the LTE. The mobile communication system 1 may be a system conforming to a TS defined in a standard other than the 3GPP standard. The base station 200 may be an integrated access and backhaul (IAB) donor or an IAB node.

In the above-described embodiment, the mobile communication system based on the NR is described as the example of the mobile communication system 1. However, the mobile communication system 1 is not limited to the example. The mobile communication system 1 may be a system conforming to a TS of LTE or another generation system (for example, sixth generation) of the 3GPP standard. The base station 200 may be an eNB that provides E-UTRA user plane and control plane protocol terminations toward the UE 100 in the LTE. The mobile communication system 1 may be a system conforming to a TS defined in a standard other than the 3GPP standard.

The steps in the operation of the above-described embodiment are not necessarily performed in the chronological order according to the order described in the flowchart or the sequence diagram. For example, the steps in the operation may be performed in an order different from the order described in the flowchart or the sequence diagram or may be performed in parallel. Also, a part of the steps in the operation may be deleted, or additional steps may be added to the processing. Further, each operation flow described above is not limited to a case of being necessarily implemented separately and independently, and two or more operation flows can be implemented in combination. For example, a part of steps of one operation flow may be added to another operation flow, or a part of steps of one operation flow may be replaced with a part of steps of another operation flow.

A program for causing a computer to perform each of the processes performed by the UE 100 or the base station 200 may be provided. The program may be recorded in a computer-readable medium. The program can be installed in the computer using the computer-readable medium. Here, the computer-readable medium in which the program is recorded may be a non-transitory recording medium. The non-transitory recording medium is not particularly limited and may be, for example, a recording medium such as a compact disk read only memory (CD-ROM) or a digital versatile disc read only memory (DVD-ROM). Also, circuits that perform the processes performed by the UE 100 or the base station 200 may be integrated, and at least a part of the UE 100 or the base station 200 may be configured as a semiconductor integrated circuit (a chipset or a system on chip (SoC)).

In the above-described embodiment, the term "transmit" may mean performing processing of at least one layer in the protocol stack used for transmission or may mean physically transmitting a signal in a wireless or wired manner. Alternatively, the term "transmit" may mean a combination of executing the processing of at least one layer and physically transmitting the signal in a wireless or wired manner as described above. Similarly, the term "receive" may mean executing processing of at least one layer in a protocol stack used for reception or may mean physically receiving a signal in a wireless or wired manner. Alternatively, the term "receive" may mean a combination of executing the processing of at least one layer and physically receiving the signal in a wireless or wired manner as described above. Similarly, the term "obtain/acquire" may mean obtaining/acquiring information from stored information, may mean obtaining/acquiring information from information received from another node, or may mean obtaining/acquiring information by generating information. Similarly, the terms "based on" and "depending on/in response to" do not mean "based only on" or "depending only on/in response only to" unless explicitly stated otherwise. The term "based on" means both "based only on" and "at least partially based on". Similarly, the term "depending on/in response to" means both "depending only on/in response only to" and "at least partially depending on/at least partially in response to". Similarly, the terms "include" and "comprise" do not mean including only enumerated items but mean both of including only enumerated items and including more items in addition to the enumerated items. Similarly, in the present disclosure, the term "or" does not mean exclusive OR, and means OR. Further, any reference to elements using designations such as "first", "second", and the like used in the present disclosure does not generally limit the amount or the order of the elements. Such designations may be used in the present disclosure as a convenient method to distinguish between two or more elements. References to first and second elements do not mean that only two elements can be employed therein or that the first element should precede the second element in any form. In the present disclosure, for example, in a case where articles such as "a", "an", and "the" in English are added by translation, such articles cover the plural meaning unless the context clearly indicates otherwise.

Although the present disclosure has been described according to examples, it is understood that the present disclosure is not limited to the examples or structures. The present disclosure also includes various modified examples or modifications made within an equivalent range. Additionally, various combinations or modes, or other combinations or modes including only one element, more elements, or less elements also fall within the scope and spirit of the present disclosure.

(Supplementary Notes)

Features related to the above-described embodiments are additionally described.

(Supplementary Note 1)

A communication apparatus including:

a receiver configured to receive a cell switch command that triggers cell switching from a base station by a medium access control (MAC) control element (CE); and
a controller configured to control uplink transmission to a target cell performed without a random access (RA) procedure between the communication apparatus and the target cell, based on the cell switch command,
in which, in a case where the cell switch command includes an uplink grant for performing the uplink transmission, the controller is configured to determine a time domain resource allocation (TDRA) table for Layer 1/Layer 2 triggered mobility (LTM) to determine a resource in a time domain for the uplink transmission.

(Supplementary Note 2)

The communication apparatus according to supplementary note 1,
in which the controller is configured to determine a dedicated TDRA table for the uplink grant included in the cell switch command as the TDRA table for the LTM.

(Supplementary Note 3)

The communication apparatus according to supplementary note 2,

in which the receiver is configured to receive, from the base station, information for configuring the dedicated TDRA table common to each candidate cell configured in the communication apparatus as a candidate for the target cell, and

the controller is configured to determine the dedicated TDRA table common to each candidate cell as the TDRA table for the LTM.

(Supplementary Note 4)

The communication apparatus according to supplementary note 2 or 3,

in which the receiver is configured to receive, from the base station, information for configuring the dedicated TDRA table dedicated to each candidate cell configured in the communication apparatus as a candidate for the target cell, and

the controller is configured to determine the dedicated TDRA table dedicated to the candidate cell corresponding to the target cell as the TDRA table for the LTM.

(Supplementary Note 5)

The communication apparatus according to any one of supplementary notes 1 to 4,

in which the receiver is configured to receive, from the base station, configuration information related to configuration of a candidate cell that is a candidate for the target cell, and

the controller is configured to determine the TDRA table for the LTM based on a TDRA table for a physical uplink shared channel (PUSCH) configured in the configuration information associated with the candidate cell corresponding to the target cell.

(Supplementary Note 6)

The communication apparatus according to supplementary note 5,

in which the controller is configured to

determine, as the TDRA table for the LTM, a predefined default TDRA table, in a case where the TDRA table for the PUSCH is not configured by the configuration information, and

determine the resource based on a subcarrier spacing of an uplink bandwidth part in the target cell.

(Supplementary Note 7)

The communication apparatus according to supplementary note 6,
in which the controller is configured to determine the subcarrier spacing based on an identifier of the uplink bandwidth part included in the cell switch command.

(Supplementary Note 8)

The communication apparatus according to supplementary note 6 or 7,
in which the controller is configured to determine the subcarrier spacing based on an identifier of the uplink bandwidth part included in the configuration information.

(Supplementary Note 9)

The communication apparatus according to any one of supplementary notes 1 to 8,

in which the controller is configured to determine a slot offset value that is time from a slot in which the uplink grant is received to a slot in which the uplink transmission is performed based on an index value included in the uplink grant and the TDRA table for the LTM, and

the controller is configured to determine the resource by applying an additional delay value in addition to the determined slot offset value.

(Supplementary Note 10)

The communication apparatus according to supplementary note 9,
in which the additional delay value is a value predefined for the uplink grant included in the cell switch command.

(Supplementary Note 11)

The communication apparatus according to supplementary note 9 or 10,
in which the receiver is configured to receive information for configuring the additional delay value from the base station.

(Supplementary Note 12)

A communication method performed by a communication apparatus, the method including the steps of:

receiving a cell switch command that triggers cell switching from a base station by a medium access control (MAC) control element (CE); and
controlling uplink transmission to a target cell performed without a random access (RA) procedure between the communication apparatus and the target cell, based on the cell switch command,
in which, in a case where the cell switch command includes an uplink grant for performing the uplink transmission, the controlling step further includes determining a time domain resource allocation (TDRA) table for Layer 1/Layer 2 triggered mobility (LTM) to determine a resource in a time domain for the uplink transmission.

(Supplementary Note 13)

A communication apparatus including:

a receiver configured to receive a radio resource control (RRC) message including configuration information related to Layer 1/Layer 2 triggered mobility (LTM) from a base station and receive a cell switch command medium access control (MAC) control element (CE) including information for identifying the configuration information and instructing cell switching from the base station; and
a controller configured to determine to perform cell switching to a target cell corresponding to information for identifying the configuration information, in a case where the cell switch command MAC CE is received, without a random access (RA) procedure,
in which, in a case where the cell switching to the target cell is performed without the RA procedure, the controller is configured to perform uplink transmission to the target cell, and
a resource in a time domain for the uplink transmission is determined by using a time domain resource allocation table determined based on information included in the configuration information.

(Supplementary Note 14)

The communication apparatus according to supplementary note 1,
in which the controller is configured to control the uplink transmission based on a grant configured by the configuration information.

(Supplementary Note 15)

The communication apparatus according to supplementary note 13 or 14,

in which the configuration information includes information related to an uplink bandwidth part (BWP), and
the uplink BWP is activated based on performance of RRC configuration or RRC reconfiguration.

(Supplementary Note 16)

The communication apparatus according to any one of supplementary notes 13 to 15,
in which the cell switch command MAC CE includes a value used for controlling an amount of timing adjustment for the uplink transmission.

(Supplementary Note 17)

A base station including:

a transmitter configured to transmit a radio resource control (RRC) message including configuration information related to Layer 1/Layer 2 triggered mobility (LTM) to a communication apparatus and transmit a cell switch command medium access control (MAC) control element (CE) including information for identifying the configuration information and instructing cell switching to the communication apparatus; and

a controller configured to include, in the configuration information, information for determining a time domain resource allocation table used for determining a resource in a time domain for uplink transmission to a target cell, in a case where the communication apparatus performs cell switching to the target cell corresponding to information for identifying the configuration information based on the reception of the cell switch command MAC CE without a random access (RA) procedure.

(Supplementary Note 18)

A communication method performed by a communication apparatus, the communication method including the steps of:

receiving a radio resource control (RRC) message including configuration information related to Layer 1/Layer 2 triggered mobility (LTM) from a base station and receiving a cell switch command medium access control (MAC) control element (CE) including information for identifying the configuration information and instructing cell switching from the base station;

determining to perform cell switching to a target cell corresponding to the information for identifying the configuration information, in a case where the cell switch command MAC CE is received, without a random access (RA) procedure; and

performing uplink transmission to the target cell, in a case where the cell switching to the target cell is performed, without the RA procedure,

in which a resource in a time domain for the uplink transmission is determined by using a time domain resource allocation table determined based on information included in the configuration information.

## Claims

1. A communication apparatus (100) comprising:

a receiver (112) configured to receive a radio resource control (RRC) message including configuration information related to Layer 1/Layer 2 triggered mobility (LTM) from a base station (200) and receive a cell switch command medium access control (MAC) control element (CE) including information for identifying the configuration information and instructing cell switching from the base station; and

a controller (120) configured to determine to perform cell switching to a target cell corresponding to the information for identifying the configuration information, in a case where the cell switch command MAC CE is received, without a random access (RA) procedure,

wherein, in a case where the cell switching to the target cell is performed without the RA procedure, the controller is configured to perform uplink transmission to the target cell, and

a resource in a time domain for the uplink transmission is determined by using a time domain resource allocation table determined based on information included in the configuration information.

2. The communication apparatus according to claim 1,
wherein the controller is configured to control the uplink transmission based on a grant configured by the configuration information.

3. The communication apparatus according to claim 1 or 2,

wherein the configuration information includes information related to an uplink bandwidth part (BWP), and
the uplink BWP is activated based on performance of RRC configuration or RRC reconfiguration.

4. The communication apparatus according to claim 1 or 2,
wherein the cell switch command MAC CE includes a value used for controlling an amount of timing adjustment for the uplink transmission.

5. A base station comprising:

a transmitter configured to transmit a radio resource control (RRC) message including configuration information related to Layer 1/Layer 2 triggered mobility (LTM) to a communication apparatus and transmit a cell switch command medium access control (MAC) control element (CE) including information for identifying the configuration information and instructing cell switching to the communication apparatus; and

a controller configured to include, in the configuration information, information for determining a time domain resource allocation table used for determining a resource in a time domain for uplink transmission to a target cell, in a case where the communication apparatus performs cell switching to the target cell corresponding to the information for identifying the configuration information based on the reception of the cell switch command MAC CE without a random access (RA) procedure.

6. A communication method performed by a communication apparatus (100), the communication method comprising the steps of:

receiving a radio resource control (RRC) message including configuration information related to Layer 1/Layer 2 triggered mobility (LTM) from a base station (200) and receiving a cell switch command medium access control (MAC) control element (CE) including information for identifying the configuration information and instructing cell switching from the base station;

determining to perform cell switching to a target cell corresponding to information for identifying the configuration information, in a case where the cell switch command MAC CE is received, without a random access (RA) procedure; and

performing uplink transmission to the target cell, in a case where the cell switching to the target cell is performed, without the RA procedure,

wherein a resource in a time domain for the uplink transmission is determined by using a time domain resource allocation table determined based on information included in the configuration information.

FIG. 1

EP 4 761 363 A1

## FIG. 2

300 — CORE NETWORK APPARATUS (AMF)
NAS

200 — BASE STATION
RRC
PDCP
RLC
MAC
PHY

100 — UE
NAS
RRC
PDCP
RLC
MAC
PHY

# FIG. 3

UE100             BASE STATION 200

S10

Measurement report     S11

RRC reconfiguration     S12

RRC reconfiguration complete     S13

S20

DL synchronization with candidate cells     S21

UL synchronization with candidate cells     S22

S30

L1 Measurement report     S31

Cell switch command (MAC CE)     S32

RA Procedure     S33

S40

LTM completion     S41

# FIG. 4

EP 4 761 363 A1

# FIG. 5

EP 4 761 363 A1

# FIG. 6

UE100          BASE STATION 200

Measurement report    S101

RRC reconfiguration    S102

RRC reconfiguration complete    S103

DL synchronization with candidate cells    S104

UL synchronization with candidate cells    S105

L1 Measurement report    S106

Cell switch command (MAC CE)    S107

DETERMINATION OF TDRM TABLE FOR LTM    S108

DETERMINATION OF TIME RESOURCE    S109

UL transmission    S110

EP 4 761 363 A1

## FIG. 7

| | pusch-ConfigCommon includes pusch-TimeDomainAllocationList | pusch-Config includes pusch-TimeDomainAllocationList | pusch-Config includes pusch-TimeDomainAllocationList-ForMultiPUSCH or pusch-Config includes pusch-TimeDomainAllocationListForMultiPUSCH-17 | PUSCH time domain resource allocation to apply |
|---|---|---|---|---|
| PUSCH scheduled by Cell Switch Command MAC CE | No | No | No | Default A |
| | Yes | No | No | pusch-TimeDomainAllocationList provided in pusch-ConfigCommon |
| | No/Yes | Yes | No | pusch-TimeDomainAllocationList provided in pusch-Config |
| | No/Yes | No/Yes | Yes | pusch-TimeDomainAllocationList-ForMultiPUSCH or pusch-TimeDomainAllocationListForMultiPUSCH -17 provided in pusch-Config |

## INTERNATIONAL SEARCH REPORT

| International application No. |
| --- |
| **PCT/JP2024/028416** |

| A. | CLASSIFICATION OF SUBJECT MATTER |
| --- | --- |

*H04W 36/08*(2009.01)i; *H04W 36/38*(2009.01)i; *H04W 72/0446*(2023.01)i; *H04W 72/231*(2023.01)i;
*H04W 74/04*(2009.01)i; *H04W 76/10*(2018.01)i
FI:　H04W36/08; H04W36/38; H04W72/0446; H04W74/04; H04W72/231; H04W76/10

According to International Patent Classification (IPC) or to both national classification and IPC

| B. | FIELDS SEARCHED |
| --- | --- |

Minimum documentation searched (classification system followed by classification symbols)

H04B7/24-7/26; H04W4/00-99/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | Nokia, Nokia Shanghai Bell, Discussion on RACH-less LTM, 3GPP TSG RAN WG4 #106 R4-2302245, 17 February 2023 sections 1-2 | 1-6 |
| Y | Ericsson, LTM cell switch command and UE actions, 3GPP TSG RAN WG2 #122 R2-2306013, 12 May 2023 pages 5, 7 | 1-6 |
| Y | Nokia, Nokia Shanghai Bell, On multi-cell PUSCH/PDSCH scheduling with a single DCI, 3GPP TSG RAN WG1 #112 R1-2300365, 17 February 2023 section 3.1.2 | 1-6 |

☐ Further documents are listed in the continuation of Box C.　　☐ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 September 2024** | **24 September 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023130208 A

**Non-patent literature cited in the description**

- 38.300 running CR for introduction of NR further mobility enhancements. *3GPP TSG-RAN WG2 Meeting #121, R2-2302039*